# EUROPEAN PATENT APPLICATION

(11) **EP 4 772 285 A1**
(43) Date of publication of application: **08.07.2026**
(21) Application number: 24916214.0
(22) Date of filing: 14.03.2024
(51) Int. Cl.: B05C 5/02

(54) **COATING DIE AND COATING DEVICE**

(30) Priority: 10.01.2024 CN 202420061895 U
(71) Applicant: Contemporary Amperex Technology Co., Limited, Ningde, Fujian 352100 (CN)
(72) Inventor: ZHAN, Bingyang, Ningde, Fujian 352100 (CN); ZHANG, Jingdong, Ningde, Fujian 352100 (CN)
(74) Representative: Ziebig Hengelhaupt Intellectual Property Attorneys Patentanwaltskanzlei PartGmbB
(86) International application number: PCT/CN2024/081708
(87) International publication number: WO 2025/148154

(57) **Abstract**

Provided are a coating die and a coating device. The coating die includes a die body (10) and a pressure adjustment component (20). The die body is provided with a feed port (K1) and a discharge port (K2) that are opposite. The die body includes a first accommodating cavity (11) and a second accommodating cavity (12) that communicate with each other. The first accommodating cavity is located on a side of the second accommodating cavity close to the feed port in a first direction (X) and communicates with the feed port. The second accommodating cavity communicates with the discharge port. The pressure adjustment component is accommodated in the second accommodating cavity. The pressure adjustment component includes a plurality of pressure adjustment plates (21). The plurality of pressure adjustment plates are spaced apart in a second direction (Y) to form a pressure control flow channel (22). The coating die and the coating device can improve the slurry coating uniformity during a coating process.

## Description

### CROSS-REFERENCE TO RELATED APPLICATIONS

The present application claims priority to Chinese Patent Application No. 202420061895.9, filed on January 10, 2024 and entitled "COATING DIE AND COATING DEVICE", which is incorporated herein by reference in its entirety.

### TECHNICAL FIELD

The present application relates to the field of battery technologies, and in particular, to a coating die and a coating device.

### BACKGROUND

Batteries have advantages such as high specific energy and high power density, and are widely applied to electronic apparatuses, such as mobile phones, notebook computers, electric bicycles, electric automobiles, electric airplanes, electric ships, electric toy cars, electric toy ships, electric toy planes, and electric tools.

As an important process during battery production, a coating process has a very important impact on the battery quality. How to improve the slurry coating uniformity in the coating process is constantly an important research direction for a person skilled in the art.

### SUMMARY

In view of the foregoing problem, the present application provides a coating die and a coating device, which can improve the coating uniformity.

According to one aspect, an embodiment of the present application provides a coating die, including a die body and a pressure adjustment component. The die body is provided with a feed port and a discharge port that are opposite. The die body includes a first accommodating cavity and a second accommodating cavity that communicate with each other. The first accommodating cavity is located on a side of the second accommodating cavity close to the feed port in a first direction and communicates with the feed port. The second accommodating cavity communicates with the discharge port. The pressure adjustment component is accommodated in the second accommodating cavity. The pressure adjustment component includes a plurality of pressure adjustment plates. The plurality of pressure adjustment plates are spaced apart in a second direction to form a pressure control flow channel. The first direction intersects the second direction.

In the foregoing solution, the pressure adjustment component is added into the coating die, so that a flow direction, a flow velocity, and a pressure of a slurry are adjusted by the aid of the pressure control flow channel formed in the pressure adjustment component, facilitating the improvement of the uniformity of the slurry at different discharge ports, so that the slurry coating uniformity in the coating process can be improved. In addition, the pressure adjustment component has a simple structure and is easy to process. A spacing between different pressure adjustment plates in the pressure adjustment component can be adaptively adjusted according to different actual requirements, to form different pressure adjustment components 20 having pressure control flow channels of different dimensions. During actual applications, the pressure adjustment component may be replaced as needed to implement uniform coating, so that practicality is high.

In some embodiments, the second accommodating cavity includes a first accommodating portion spaced apart from the first accommodating cavity in the first direction and a channel structure communicating with the first accommodating portion and the first accommodating cavity. The pressure adjustment component is accommodated in the channel structure.

In the foregoing solution, the pressure adjustment component is accommodated in the channel structure. Compared with a solution in which the pressure adjustment component is accommodated in the first accommodating portion, such design enables the pressure adjustment component to be closer to the first accommodating cavity. The slurry flowing out from the first accommodating cavity first enters the pressure control flow channel in the pressure adjustment component, and then transfers into the first accommodating portion after undergoing flow control processing in the pressure control flow channel. As such, the slurry flowing out from different pressure control flow channels converges in the first accommodating portion, and finally is sprayed to cover an electrode sheet. In this way, each position in a coating region of the electrode sheet can be coated with the slurry, so that uniform coating is implemented while the electrode sheet is completely coated.

In some embodiments, the pressure adjustment component includes a first side portion abutting on the first accommodating portion. The first accommodating portion has a first inner wall relatively far away from the pressure adjustment component in the first direction. The first side portion abuts on and smoothly transitions to the first inner wall.

In the foregoing solution, the first side portion abuts on the first inner wall, thereby enable the first side portion and the first inner wall to jointly form an accommodating space corresponding to the first accommodating portion through enclosing. Further, in this embodiment of the present application, the first side portion is further disposed as smoothly transitioning to the first inner wall, so as to improve fitting reliability between the first side portion and the first inner wall.

In some embodiments, the die body includes a first die and a second die. The first die includes the first accommodating cavity and the second accommodating cavity. The coating die further includes a press strip connected to the second die. The press strip is accommodated in the first accommodating cavity and is spaced apart from at least part of an inner wall of the first accommodating cavity.

In the foregoing solution, the press strip is spaced apart from at least part of the inner wall of the first accommodating cavity, so that a flow uniforming cavity through which the slurry can flow can be formed between the press strip and the inner wall of the first accommodating cavity. The flow uniforming cavity communicates with the second accommodating cavity. On that basis, the shape and dimension of the flow uniforming cavity may be adjusted by adjusting relative shapes of as well as a spacing between the press strip and the inner wall of the first accommodating cavity, so as to further adjust the flow of the slurry, facilitating implementing uniform coating on the electrode sheet.

In some embodiments, the coating die further includes a gasket sandwiched between the first die and the second die. An edge of the gasket in the first direction is provided with a notch. The notch communicates with the pressure control flow channel to form the discharge port.

In the foregoing solution, the notch on the gasket and the pressure control flow channel may jointly form the discharge port. Therefore, during the flow of the slurry at the discharge ports, different pressure control flow channels may equalize and adjust flow velocities, pressures, and the like of the slurry at different positions, so as to improve the uniformity of the slurry during discharge, thereby improving the slurry coating uniformity in the coating process.

In some embodiments, the pressure adjustment component has a plurality of first regions and second regions that are alternately arranged in the second direction. The plurality of pressure adjustment plates are disposed in the first regions. The pressure adjustment component further includes liquid blocking plates disposed in the second regions. A plurality of notches are spaced apart in the second direction. The gasket includes a blocking portion located between adjacent ones of the notches. The blocking portion is disposed as covering the liquid blocking plate.

In the foregoing solution, the gasket further includes the blocking portion located between the adjacent notches. The notch is disposed as corresponding to the pressure adjustment plate in the first region, and the blocking portion covers the liquid blocking portion in the second region. The notch and the pressure control flow channel formed by the adjacent pressure adjustment plates are used for forming the discharge port, and the blocking portion and the liquid blocking plate are used for preventing the slurry from flowing out from a region between adjacent ones of the discharge ports, thereby implementing regional coating on the electrode sheet.

In some embodiments, the first die and the second die are disposed opposite each other in a third direction. Each two of the first direction, the second direction, and the third direction intersect each other. The pressure adjustment component further includes a body portion. The pressure adjustment plate and the liquid blocking plate are located on a same side of the body portion in the third direction.

In the foregoing solution, the pressure adjustment plate and the liquid blocking plate may be located on the same side of the body portion in the third direction, thereby facilitating the reduction of difficulty in preparing the pressure adjustment plate and the liquid blocking plate. In addition, the pressure adjustment plate and the liquid blocking plate may be manufactured in synchronism with the gasket by using an integrated-molding processing method such as casting, enabling the pressure adjustment plate with the pressure control flow channel and the liquid blocking portion to be synchronously and integrally manufactured. This not only facilitates the processing and manufacturing of the pressure adjustment component, but also enables an overall structure of the pressure adjustment component to have good strength.

In some embodiments, a dimension of the pressure adjustment plate in the third direction is greater than a dimension of the liquid blocking plate in the third direction.

In the foregoing solution, the dimension of the pressure adjustment plate in the third direction is greater than the dimension of the liquid blocking plate in the third direction, enabling the pressure adjustment plate to be partially located inside the notch, thereby further improving flow control reliability corresponding to the pressure adjustment component.

In some embodiments, the die body has a first edge and a second edge that are opposite in the second direction. In a direction directed from the feed port to the first edge, a spacing between adjacent ones of the pressure adjustment plates has a gradual increase trend; and/or in a direction directed from the feed port to the second edge, a spacing between adjacent ones of the pressure adjustment plates has a gradual increase trend.

In the foregoing solution, dimensions of the pressure control flow channels at different positions in the second direction are adjusted, thereby facilitating the improvement of the uniformity of the slurry outflow. Specifically, the pressure control flow channel is configured to adjust parameters such as the flow velocity and the pressure of the slurry, and a spacing between the adjacent pressure adjustment plates in the second direction is positively correlated to the dimension of the pressure control flow channel. Further, in this embodiment of the present application, in the direction directed from the feed port to the first edge, the spacing between the adjacent pressure adjustment plates may be set to the gradual increase trend, enabling the pressure control flow channel closer to the first edge to have a larger dimension, thereby making a loss of the slurry in the pressure control flow channel close to the first edge less than a loss of the slurry in the pressure control flow channel close to the feed port. This facilitates equalization of the pressures of the slurry at different positions in the second direction, improving discharge consistency at the discharge ports, and improving the slurry coating uniformity in the coating process.

In some embodiments, the coating die further includes a first adjustment member connected to the first die, where the first adjustment member is configured to adjust a size of an opening of the discharge port; and/or the coating die further includes a second adjustment member connected to the second die, where the second adjustment member is configured to adjust the size of the opening of the discharge port.

In the foregoing solution, both the first adjustment member and the second adjustment member may be rod-shaped members configured to adjust the size of the discharge port. The first adjustment member is connected to the first die, and the second adjustment member is connected to the second die. An operator may cause the first die to move under driving of the first adjustment member, so as to adjust the discharge port, or may cause the second die to move under driving of the second adjustment member, so as to adjust the discharge port, thereby facilitating the improvement of the slurry coating uniformity.

In some embodiments, the coating die includes a plurality of first adjustment members. The plurality of first adjustment members are disposed side by side in the second direction, and a number of the pressure adjustment plates is greater than a number of the first adjustment members. In addition/Alternatively, the coating die includes a plurality of second adjustment members, where the plurality of second adjustment members are disposed side by side in the second direction, and the number of the pressure adjustment plates is greater than a number of the second adjustment members.

In the foregoing solution, the pressure control flow channel formed by the spacing between the pressure adjustment plates may have the same function of adjusting slurry coating. Further, the number of the pressure adjustment plates is greater than the number of the first adjustment members, and/or the number of the pressure adjustment plates is greater than the number of the second adjustment members. Such design enables the pressure adjustment plates to further fine adjust and control the slurry coating effect based on the first adjustment members and the second adjustment members, thereby facilitating further improvement of the slurry coating uniformity.

According to a second aspect, an embodiment of the present application further provides a coating device for an electrode sheet. The coating device includes the coating die provided in any one of the foregoing technical solutions. The coating die is configured to coat a surface of the electrode sheet with a slurry.

### BRIEF DESCRIPTION OF THE DRAWINGS

To describe the technical solutions of the embodiments of the present application more clearly, the accompanying drawings required in the embodiments of the present application are briefly described. Apparently, the accompanying drawings described below are merely some embodiments of the present application. For a person of ordinary skill in the art, other accompanying drawings can be further obtained based on the accompanying drawings without creative efforts.
FIG. 1 is a schematic structural diagram of a coating die according to an embodiment of the present application;
FIG. 2 is another schematic structural diagram of a coating die according to an embodiment of the present application;
FIG. 3 is a schematic sectional view at A-A in FIG. 2;
FIG. 4 is a schematic enlarged view of a region Q in FIG. 3;
FIG. 5 is a schematic diagram of a fitting relationship between a first die and a pressure adjustment component in a coating die according to an embodiment of the present application;
FIG. 6 is a schematic enlarged view of a region P in FIG. 5;
FIG. 7 is a schematic structural diagram of a pressure adjustment component in a coating die according to an embodiment of the present application;
FIG. 8 is a schematic sectional view at B-B in FIG. 7;
FIG. 9 is a schematic diagram of a fitting relationship between a first die, a gasket, and a pressure adjustment component in a coating die according to an embodiment of the present application; and
FIG. 10 is a schematic enlarged view of a region M in FIG. 7.

Reference numerals in the specific embodiments are as follows:
10. die body; 11. first accommodating cavity; 12. second accommodating cavity; 121. first accommodating portion; 122. channel structure; 13; first die; 14. second die; 15. press strip;
20. pressure adjustment component; 21. pressure adjustment plate; 22. pressure control flow channel; 23. liquid blocking plate; 24. body portion;
30. gasket; 31. notch; 32. blocking portion;
40. first adjustment member;
50. second adjustment member;
K1. feed port; K2. discharge port;
A1. first region; A2. second region;
B1. first side portion; B2. first inner wall;
E1. first edge; E2. second edge;
X. first direction; Y. second direction; and Z. third direction.

### DETAILED DESCRIPTION

Embodiments of the technical solutions of the present application will be described in detail below with reference to the accompanying drawings. The following embodiments are used only to describe the technical solutions of the present application more explicitly, and therefore are interpreted only as examples, rather than as limitations on the protection scope of the present application.

Unless otherwise defined, all technical and scientific terms used herein have the same meaning as commonly understood by those skilled in the technical field to which the present application relates. The terminology used herein is for the purpose of describing particular embodiments only and is not intended to limit the present application. The terms "comprising" and "having" and any variations thereof in the description and claims of the present application and the foregoing description of the accompanying drawings are intended to cover non-exclusive inclusions.

In the description of the embodiments of the present application, the technical terms "first", "second", and the like are intended only to distinguish different objects, and should not be understood as indicating or implying relative importance or implying the number, specific order, or primary and secondary relationship of indicated technical features. In the description of the embodiments of the present application, "a plurality of" means two or more, unless otherwise expressly and specifically defined.

Reference to "embodiment" herein means that particular features, structures, or characteristics described with reference to the embodiment may be included in at least one embodiment of the present application. The term appearing at different positions in this specification may not refer to the same embodiment or an independent or alternative embodiment that is mutually exclusive with another embodiment. A person skilled in the art explicitly or implicitly understands that the embodiments described herein may be combined with other embodiments.

In the description of the present application, the term "and/or" is merely an association to describe the associated objects. It can mean that there are three kinds of relationships, such as A and/or B, which means that A exists alone, A and B exist at the same time, and B exists alone. In addition, the character "/" herein generally indicates an "or" relationship between the associated objects.

In the description of the embodiments of the present application, the term "a plurality of' means two or more (including two). Similarly, "a plurality of groups" means two or more groups (including two groups), and "a plurality of pieces" means two or more pieces (including two pieces).

In the description of the embodiments of the present application, the orientations or positional relationships indicated by the technical terms such as "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", and "circumferential" are based on the orientations or positional relationships shown in the accompanying drawings, and are only for the convenience of describing the present application and simplifying the description, rather than indicating or implying that the involved device or element should have a specific orientation or should be configured or operated in the specific orientation, and therefore cannot be understood as limitations on the embodiments of the present application.

In the description of the embodiments of the present application, unless otherwise explicitly specified and defined, the technical terms "mounted", "connected", "connect", "fixed", and the like should be understood in a broad sense. For example, a connection may refer to a fixed connection, a detachable connection, or an integral connection; a mechanical connection or an electrical connection; a direct connection, an indirect connection via an intermediate medium, internal communication between two elements, or an interaction between two elements. For a person of ordinary skill in the art, the specific meanings of the above terms in the embodiments of the present application may be interpreted according to the specific situations.

Currently, from the perspective of development of the market situation, battery applications have proliferated. Batteries are used in energy storage power systems such as water power plants, fire power plants, wind power plants, and solar power plants, and are also widely used in electric transportation tools such as electric bicycles, electric motorcycles, and electric automobiles, as well as in military equipment, aerospace, and other fields.

Coating is an essential process during battery production. A coating process has a very important impact on the quality of a battery, and directly affects various performance indicators such as reliability, capacity, and service life of the battery. A key process of. The coating refers to a method of preparing a composite material (film) by coating paper, cloth, or a plastic thin film with a pasty polymer, a fused polymer, or a polymer solution. In a coating process for an electrode sheet, a surface of the electrode sheet is coated with a slurry by means of a coating die, enabling the electrode sheet to have good electrical characteristics.

Currently, when the electrode sheet is coated by means of the coating die, the slurry needs to enter the inside of the coating die from a feed port, and then flow out from a discharge port for coating onto the electrode sheet. Inside the coating die, due to the impacts of velocity and pressure losses of the slurry, a flow rate of the slurry at a discharge port close to the feed port is greater than a flow rate of the slurry at a discharge port far away from the feed port. This causes different coating weights at different positions on the surface of the electrode sheet, reducing consistency of the electrode sheet, which is adverse to improving the quality of the electrode sheet.

In view of this, embodiments of the present application provide a coating die. A pressure adjustment component is added into the coating die, so that flow rates of a slurry at different positions inside the coating die are equalized by the aid of the pressure adjustment component, facilitating the improvement of discharge consistency at a plurality of discharge ports, so that the slurry coating uniformity in the coating process can be improved.

It should be noted that the coating die disclosed in the embodiments of the present application may be configured to, without limitation, coat an electrode sheet, or may be configured to coat other thin films such as paper, cloth, and plastic films to obtain composite materials (films), thereby obtaining composite materials (films) with some characteristics.

The technical solutions of the coating die and a coating device provided in the embodiments of the present application are further described below.

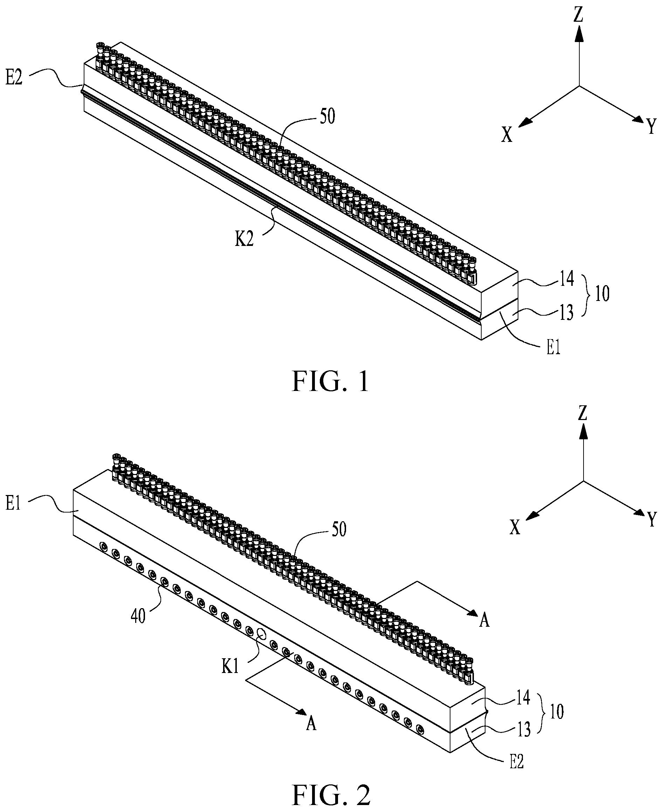

According to a first aspect, referring to FIG. 1 to FIG. 6, an embodiment of the present application provides a coating die. The coating die includes a die body 10 and a pressure adjustment component 20. The die body 10 is provided with a feed port K1 and a discharge port K2 that are opposite. The die body 10 includes a first accommodating cavity 11 and a second accommodating cavity 12 that communicate with each other. The first accommodating cavity 11 is located on a side of the second accommodating cavity 12 close to the feed port K1 in a first direction X and communicates with the feed port K1. The second accommodating cavity 12 communicates with the discharge port K2. The pressure adjustment component 20 is accommodated in the second accommodating cavity 12. The pressure adjustment component 20 includes a plurality of pressure adjustment plates 21. The plurality of pressure adjustment plates 21 are spaced apart in a second direction Y to form a pressure control flow channel 22. The first direction X intersects the second direction Y.

The coating die may be an assembly of a coating device in a coating process, and is configured to coat a surface of an electrode sheet with a slurry. After the slurry is introduced into the coating die, the slurry is synchronously applied to a plurality of positions on the electrode sheet by means of the coating die, so as to implement high-efficiency coating on the electrode sheet. Further, a plurality of coating regions spaced apart may be provided on a single electrode sheet, and slurry coating may be simultaneously performed on the plurality of coating regions of the single electrode sheet by means of the coating die. Then, the single electrode sheet may form a plurality of independent structures through cutting or the like. The independent structures each include a partial structure of the coating region and are respectively used in different battery cells.

The die body 10 may be a body structure in the coating die, and is configured to carry and dispose a structure or a member in the coating die. The die body 10 may have two opposite ends in the first direction X. The feed port K1 and the discharge port K2 are respectively located at different ends of the die body 10 in the first direction X.

The feed port K1 may be an opening structure provided on the die body 10, and is configured to introduce the slurry into the die body 10. The first accommodating cavity 11 and the second accommodating cavity 12 may be cavity structures disposed inside the die body 10. The first accommodating cavity 11 is located on the side of the second accommodating cavity 12 close to the feed port K1 in the first direction X. In other words, a minimum distance between the first accommodating cavity 11 and the feed port K1 in the first direction X is less than a minimum distance between the second accommodating cavity 12 and the feed port K1 in the first direction X. The first accommodating cavity 11 is disposed in communication with the feed port K1, allowing the slurry flowing into the first accommodating cavity 11 from the feed port K1 to flow and temporarily remain therein.

The second accommodating cavity 12 is disposed close to the discharge port K2. The second accommodating cavity 12 communicates with both the first accommodating cavity 11 and the discharge port K2. The slurry may transfer from the first accommodating cavity 11 into the second accommodating cavity 12, and temporarily remain in the second accommodating cavity 12, thereby facilitating more uniform and stable outflow of the slurry from the discharge port K2.

Optionally, a plurality of discharge ports K2 are disposed side by side in the second direction Y, and both the first accommodating cavity 11 and the second accommodating cavity 12 extend in the second direction Y. As such, the slurry entering the first accommodating cavity 11 may flow and spread in the second direction Y, and the slurry entering the second accommodating cavity 12 may flow and spread in the second direction Y, facilitating subsequent transfer of the slurry to the plurality of discharge ports K2. There are a plurality of forms of angles between the first direction X and the second direction Y. For example, the first direction X is perpendicular to the second direction Y.

Further, in this embodiment of the present application, the pressure adjustment component 20 is further added into the coating die. The pressure adjustment component 20 is accommodated in the second accommodating cavity 12. The pressure adjustment component 20 may abut on the first accommodating cavity 11, or the pressure adjustment component 20 may be spaced apart from the first accommodating cavity 11 in the first direction X.

The pressure adjustment component 20 is mainly configured to adjust a flow velocity and a pressure of the slurry flowing through the second accommodating cavity 12. The pressure adjustment component 20 includes the plurality of pressure adjustment plates 21. The plurality of pressure adjustment plates 21 are spaced apart in the second direction Y to form the pressure control flow channel 22. The slurry located at different positions in the second direction Y may enter different pressure control flow channels 22. On that basis, the pressure control flow channels 22 may have a function of flow guide. In addition, by adjusting dimensions of different pressure control flow channels 22 in the second direction Y, flow velocities and pressures corresponding to the slurry passing through the different pressure control flow channels 22 can be adjusted and changed.

Specifically, a pressure loss corresponding to the slurry entering the pressure control flow channel 22 is generally negatively correlated to the dimension of the pressure control flow channel 22 in the second direction Y. In other words, when the dimension of the pressure control flow channel 22 in the second direction Y is larger, the pressure loss corresponding to the slurry is smaller, and a flow velocity loss corresponding to the slurry is lower. Further, the dimension of the pressure control flow channel 22 at a position at which the slurry has a small flow velocity in the second direction Y may be moderately increased, and the dimension of the pressure control flow channel 22 at a position at which the slurry has a large flow velocity in the second direction Y may be moderately decreased, so as to equalize and control the flow velocities of the slurry flowing out of different pressure control flow channels 22, thereby improving the slurry coating uniformity.

To sum up, in this embodiment of the present application, the pressure adjustment component 20 is added into the coating die, so that the flow direction, the flow velocity, and the pressure of the slurry are adjusted by the aid of the pressure control flow channel 22 formed in the pressure adjustment component 20, facilitating the improvement of the uniformity of the slurry at different discharge ports K2, so that the slurry coating uniformity in the coating process can be improved. In addition, the pressure adjustment component 20 has a simple structure and is easy to process. A spacing between different pressure adjustment plates 21 in the pressure adjustment component 20 can be adaptively adjusted according to different actual requirements, to form different pressure adjustment components 20 having pressure control flow channels 22 of different dimensions. During actual applications, the pressure adjustment component 20 may be replaced as needed to implement uniform coating, so that practicality is high.

It should be noted that the coating die as well as the first accommodating cavity 11, the second accommodating cavity 12, and the pressure adjustment component 20 therein may each have a plurality of forms of dimensions. Optionally, a dimension of the coating die in the first direction X is greater than a dimension of the coating die in the first direction X by a magnitude not less than 150 mm and not greater than 300 mm. Alternatively, a dimension of at least one of the first accommodating cavity 11 and the second accommodating cavity 12 in the first direction X is optionally less than the dimension of the coating die in the first direction X, with a difference not less than 75 mm and not greater than 200 mm. Alternatively, a dimension B of the pressure adjustment plate 21 in the second direction Y is optionally not less than 10 mm and not greater than 25 mm.

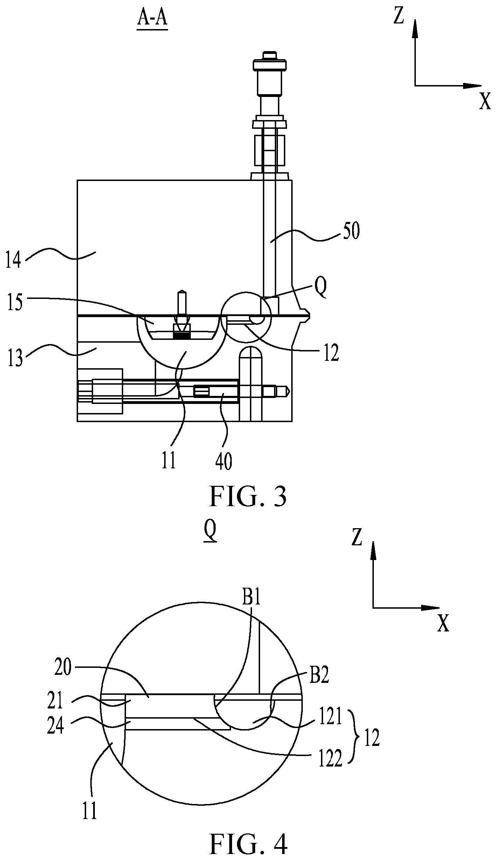

In some embodiments, as shown in FIG. 4 to FIG. 6, the second accommodating cavity 12 includes a first accommodating portion 121 spaced apart from the first accommodating cavity 11 in the first direction X and a channel structure 122 communicating with the first accommodating portion 121 and the first accommodating cavity 11. The pressure adjustment component 20 is accommodated in the channel structure 122.

The second accommodating cavity 12 includes at least two structures of the first accommodating portion 121 and the channel structure 122. The first accommodating portion 121 abuts on the channel structure 122 in the first direction X, where both the first accommodating portion 121 and the channel structure 122 may extend in the second direction Y. Optionally, a dimension of the channel structure 122 in the first direction X may be less than the dimension of the first accommodating portion 121 in the first direction X.

The first accommodating portion 121 and the first accommodating cavity 11 are spaced apart in the first direction X. The channel structure 122 may be configured to communicate with the first accommodating portion 121 and the first accommodating cavity 11. The first accommodating portion 121 may communicate with an external environment of the coating die, that is, at least part of the first accommodating portion 121 may be used for forming the discharge port K2.

In the embodiments of the present application, the pressure adjustment component 20 is accommodated in the channel structure 122. Compared with a solution in which the pressure adjustment component 20 is accommodated in the first accommodating portion 121, such design enables the pressure adjustment component 20 to be closer to the first accommodating cavity 11. The slurry flowing out from the first accommodating cavity 11 first enters the pressure control flow channel 22 in the pressure adjustment component 20, and then transfers into the first accommodating portion 121 after undergoing flow control processing in the pressure control flow channel 22. As such, the slurry flowing out from different pressure control flow channels 22 converges in the first accommodating portion 121, and finally is sprayed to cover the electrode sheet. In this way, each position in a coating region of the electrode sheet can be coated with the slurry, so that uniform coating is implemented while the electrode sheet is completely coated.

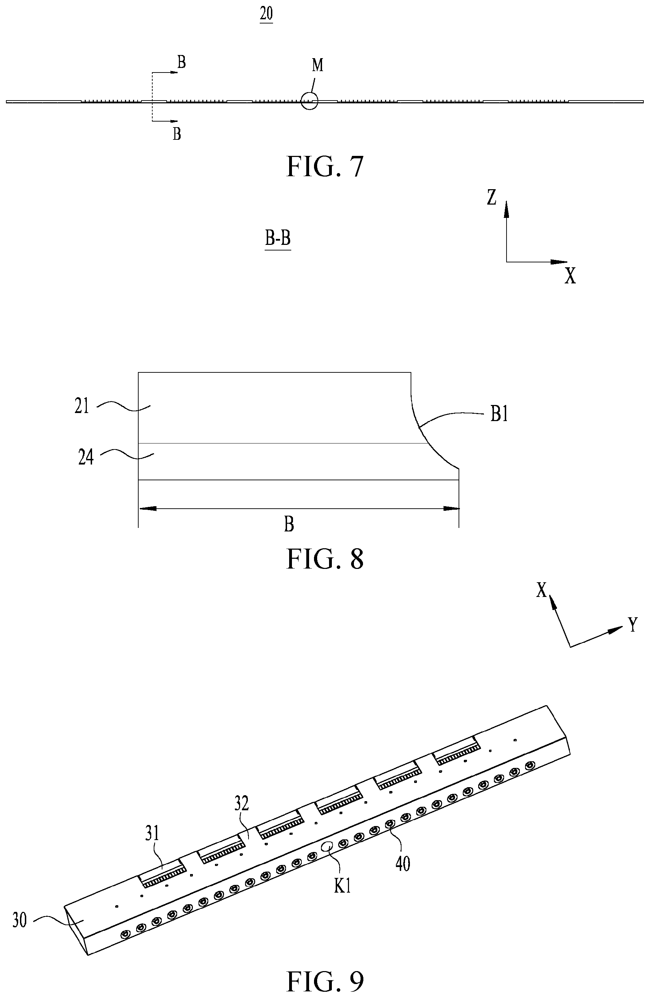

In some embodiments, referring to FIG. 4, FIG. 7, and FIG. 8, the pressure adjustment component 20 includes a first side portion B1 abutting on the first accommodating portion 121. The first accommodating portion 121 has a first inner wall B2 relatively far away from the pressure adjustment component 20 in the first direction X. The first side portion B1 abuts on and smoothly transitions to the first inner wall B2.

The first side portion B1 is a surface in the pressure adjustment component 20 that faces the first accommodating portion 121. The first inner wall B2 is an inner wall surface of the first accommodating portion 121 that is relatively far away from the pressure adjustment component 20. On that basis, in this embodiment of the present application, the first side portion B1 abuts on the first inner wall B2, thereby enable the first side portion B1 and the first inner wall B2 to jointly form an accommodating space corresponding to the first accommodating portion 121 through enclosing. Further, in this embodiment of the present application, the first side portion B1 is further disposed as smoothly transitioning to the first inner wall B2, so as to improve fitting reliability between the first side portion B1 and the first inner wall B2.

It should be noted that both the first inner wall B2 and the first side portion B1 have a plurality of forms of structures. Optionally, the first inner wall B2 and the first side portion B1 both include arc-shaped structures, and correspond to the same curvature.

In some embodiments, as shown in FIG. 1 to FIG. 4, the die body 10 includes a first die 13 and a second die 14, where the first die 13 includes the first accommodating cavity 11 and the second accommodating cavity 12. The coating die further includes a press strip 15 connected to the second die 14, where the press strip 15 is accommodated in the first accommodating cavity 11 and is spaced apart from at least part of an inner wall of the first accommodating cavity 11.

The first die 13 and the second die 14 are main components constituting the die body 10. There are a plurality of manners of connections between the first die 13 and the second die 14. Optionally, the first die 13 and the second die 14 may be detachably connected by means of bolting or the like.

The first accommodating cavity 11 and the second accommodating cavity 12 are both located in the first die 13. Optionally, the first die 13 includes a surface facing the second die 14, where the first accommodating cavity 11 and the second accommodating cavity 12 may be formed by inward recesses of the surface. Optionally, the first accommodating cavity 11 as well as the first accommodating portion 121 and the channel structure 122 in the second accommodating cavity 12 may each be a groove-shaped structure, and extend in the second direction Y.

The press strip 15 is connected to the second die 14 in a connection manner including, but not limited to, bolting. The press strip 15 is accommodated in the first accommodating cavity 11. The press strip 15 may be a strip-shaped member extending in the second direction Y. When the second die 14 is snap-fitted with the first die 13, the press strip 15 extends deep into the first accommodating cavity 11.

Further, in this embodiment of the present application, the press strip 15 is spaced apart from at least part of the inner wall of the first accommodating cavity 11, so that a flow uniforming cavity through which the slurry can flow can be formed between the press strip 15 and the inner wall of the first accommodating cavity 11. The flow uniforming cavity communicates with the second accommodating cavity 12. On that basis, the shape and dimension of the flow uniforming cavity may be adjusted by adjusting relative shapes of as well as a spacing between the press strip 15 and the inner wall of the first accommodating cavity 11, so as to further adjust the flow of the slurry, facilitating implementing uniform coating on the electrode sheet.

It should be noted that the press strip 15 and the first accommodating cavity 11 may have a variety of shapes and structures. Optionally, a surface of the press strip 15 that faces the inner wall of the first accommodating cavity 11 and the inner wall of the first accommodating cavity 11 each have an arc-shaped structure. This facilitates the reduction of resistance to the flow of the slurry in the flow uniforming cavity, reducing the pressure loss of the slurry.

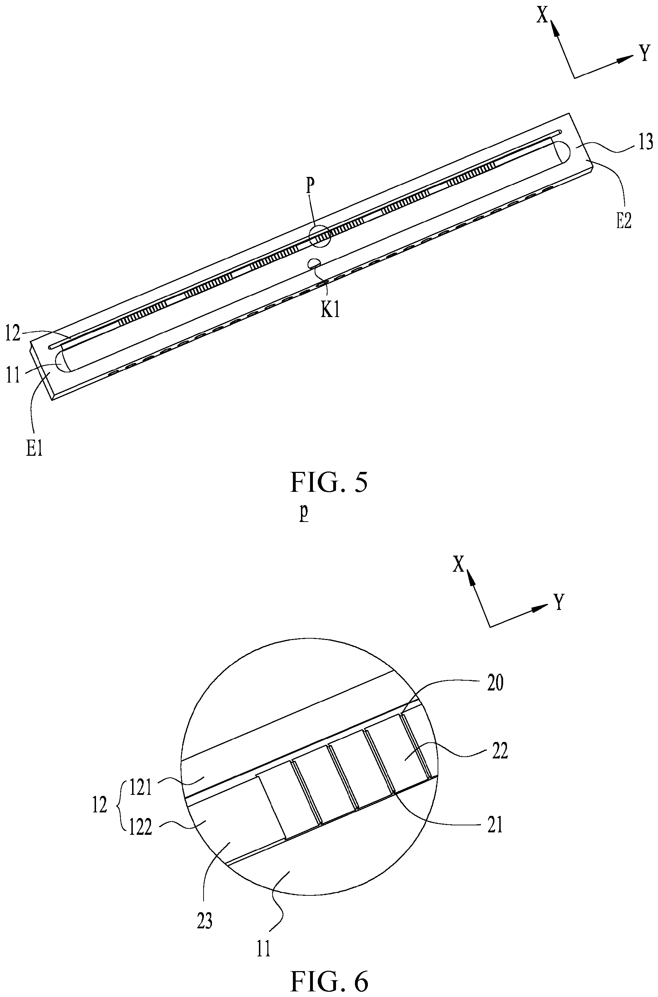

In some embodiments, referring to FIG. 5, FIG. 6, and FIG. 9, the coating die further includes a gasket 30 sandwiched between the first die 13 and the second die 14. An edge of the gasket 30 in the first direction X is provided with a notch 31, where the notch 31 communicates with the pressure control flow channel 22 to form the discharge port K2.

The gasket 30 is a member configured to define a dimension and a relative position of the discharge port K2. The gasket 30 has two opposite edges in the first direction X. One of the edges is relatively far away from the feed port K1 and is provided with the notch 31. The notch 31 penetrates through the gasket 30 in a thickness direction thereof and communicates with the pressure control flow channel 22. Further optionally, the notch 31 may communicate with the first accommodating portion 121. The first accommodating portion 121, the pressure control flow channel 22, and the notch 31 jointly form the discharge port K2 configured to communicate with the external environment.

There are a plurality of manners for forming the notch 31. For example, the notch 31 on the gasket 30 may be manufactured in synchronism with the gasket 30 by using an integrated-molding processing method such as casting, allowing the gasket 30 with the notch 31 to be integrally and synchronously manufactured. This not only facilitates the processing and manufacturing of the gasket 30, but also enables an overall structure of the gasket 30 to have good strength. Alternatively, the notch 31 may be manufactured by processing an entire blank of the gasket 30 by using a machining method such as milling, resulting in low processing difficulty and processing costs of the gasket 30.

In addition, there are a variety of forms of dimensions, shapes, and numbers of the notches 31. Optionally, there may be a plurality of notches 31, where the plurality of notches 31 are spaced apart in the second direction Y to form different discharge ports K2. Moreover, a dimension of the notch 31 in the second direction Y may be moderately adjusted according to actual requirements, to limit a dimension of the discharge port K2 in the second direction Y.

In the embodiments of the present application, the notch 31 on the gasket 30 and the pressure control flow channel 22 may jointly form the discharge port K2. Therefore, during the flow of the slurry at the discharge ports K2, different pressure control flow channels 22 may equalize and adjust flow velocities, pressures, and the like of the slurry at different positions, so as to improve the uniformity of the slurry during discharge, thereby improving the slurry coating uniformity in the coating process.

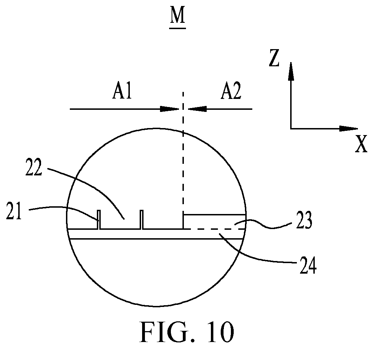

In some embodiments, with combined reference to FIG. 10, the pressure adjustment component 20 has a plurality of first regions A1 and second regions A2 that are alternately arranged in the second direction Y. The plurality of pressure adjustment plates 21 are disposed in the first regions A1. The pressure adjustment component 20 further includes liquid blocking plates 23 disposed in the second regions A2. The plurality of notches 31 are spaced apart in the second direction Y. The gasket 30 includes a blocking portion 32 located between adjacent ones of the notches 31, where the blocking portion 32 is disposed as covering the liquid blocking plate 23.

The pressure adjustment component 20 includes the plurality of first regions A1 and the plurality of second regions A2. The plurality of first regions A1 and the plurality of second regions A2 are disposed side by side in the second direction Y, where one second region A2 is provided between adjacent ones of the first regions A1, and one first region A1 is provided between adjacent ones of the second regions A2. A dimension of the first region A1 in the second direction Y is equal to a dimension of the second region A2 in the second direction Y. Alternatively, the dimension of the first region A1 in the second direction Y may be less than or greater than the dimension of the second region A2 in the second direction Y.

The first regions A1 are used to arrange the plurality of pressure adjustment plates 21. The plurality of pressure adjustment plates 21 are spaced apart from each other, so as to form a plurality of pressure control flow channels 22 at the first regions A1. The second regions A2 are used to arrange the liquid blocking plates 23. The liquid blocking plates 23 are configured to prevent the slurry from flowing out from the second regions A2 in the pressure adjustment component 20. For example, the electrode sheet coated by means of the coating die is provided with a plurality of coating regions. The plurality of coating regions are spaced apart from each other. The first region A1 and the pressure adjustment plate 21 located at the first region A1 may be disposed as corresponding to the coating region of the electrode sheet. The second region A2 and the liquid blocking plate 23 located at the second region A2 may be disposed as corresponding to a region between adjacent ones of the coating regions on the electrode sheet.

Further, in this embodiment of the present application, the gasket 30 further includes the blocking portion 32 located between the adjacent notches 31. The notch 31 is disposed as corresponding to the pressure adjustment plate 21 in the first region A1, that is, the notch 31 is disposed as corresponding to the first region A1. The blocking portion 32 covers the liquid blocking portion in the second region A2, that is, the blocking portion 32 is disposed as corresponding to the second region A2. The notch 31 and the pressure control flow channel 22 formed by the adjacent pressure adjustment plates 21 are used for forming the discharge port K2, and the blocking portion 32 and the liquid blocking plate are used for preventing the slurry from flowing out from a region between adjacent ones of the discharge ports K2, thereby implementing regional coating on the electrode sheet.

In some embodiments, as shown in FIG. 6 and FIG. 10, the first die 13 and the second die 14 are disposed opposite each other in a third direction Z, and each two of the first direction X, the second direction Y, and the third direction Z intersect each other. The pressure adjustment component 20 further includes a body portion 24, and the pressure adjustment plate 21 and the liquid blocking plate 23 are located on a same side of the body portion 24 in the third direction Z.

The third direction Z is an arrangement manner of the first die 13 and the second die 14, and the third direction Z may be a recess direction of the first accommodating cavity 11 and the second accommodating cavity 12. Optionally, each two of the first direction X, the second direction Y, and the third direction Z are perpendicular to each other.

The pressure adjustment component 20 includes a part of the body portion 24, the liquid blocking plate 23, and the pressure adjustment plate 21. The body portion 24 can support the liquid blocking plate 23 and the pressure adjustment plate 21. For example, the body portion 24 has an elongated structure extending in the second direction Y, and the body portion 24 is located in both the first region A1 and the second region A2.

Further, in this embodiment of the present application, the pressure adjustment plate 21 and the liquid blocking plate 23 may be located on the same side of the body portion in the third direction Z, thereby facilitating the reduction of difficulty in preparing the pressure adjustment plate 21 and the liquid blocking plate 23. In addition, the pressure adjustment plate 21 and the liquid blocking plate 23 may be manufactured in synchronism with the gasket 30 by using an integrated-molding processing method such as casting, enabling the pressure adjustment plate 21 with the pressure control flow channel 22 and the liquid blocking portion to be synchronously and integrally manufactured. This not only facilitates the processing and manufacturing of the pressure adjustment component 20, but also enables an overall structure of the pressure adjustment component 20 to have good strength.

In some embodiments, as shown in FIG. 10, a dimension of the pressure adjustment plate 21 in the third direction Z is greater than a dimension of the liquid blocking plate in the third direction Z.

It can be seen from the foregoing content that, the notch 31 on the gasket 30 is disposed opposite the pressure adjustment plate 21, and the blocking portion 32 on the gasket 30 is disposed as covering the liquid blocking plate. On that basis, if the dimension of the pressure adjustment plate 21 in the third direction Z is less than the dimension of the liquid blocking plate in the third direction Z, when the blocking portion 32 is in contact with the liquid blocking plate, there is a gap between the pressure adjustment plate 21 and the gasket 30 in the third direction Z. The presence of the gap may cause part of the slurry to refrain from flowing into the pressure control flow channel 22, thereby reducing pressure and flow control effects of the pressure adjustment component 20 on the slurry.

In view of this, in this embodiment of the present application, the dimension of the pressure adjustment plate 21 in the third direction Z is greater than the dimension of the liquid blocking plate in the third direction Z, enabling the pressure adjustment plate 21 to be partially located inside the notch 31, thereby further improving flow control reliability corresponding to the pressure adjustment component 20.

In some embodiments, as shown in FIG. 5 and FIG. 6, the die body 10 has a first edge E1 and a second edge E2 that are opposite in the second direction Y. In a direction directed from the feed port K1 to the first edge E1, a spacing between adjacent ones of the pressure adjustment plates 21 has a gradual increase trend; and/or in a direction directed from the feed port K1 to the second edge E2, a spacing between adjacent ones of the pressure adjustment plates 21 has a gradual increase trend.

The slurry flowing out from the feed port K1 enters the first accommodating cavity 11 and flows towards a position close to the first edge E1 or the second edge E2 in the second direction Y. In this process, the slurry at a position closer to the feed port K1 in the first accommodating cavity 11 generally has a larger flow rate, and the slurry at a position closer to the first edge E1 or the second edge E2 generally has a smaller flow rate.

On that basis, in this embodiment of the present application, dimensions of the pressure control flow channels 22 at different positions in the second direction Y are adjusted, thereby facilitating the improvement of the uniformity of the slurry outflow. Specifically, the pressure control flow channel 22 is configured to adjust parameters such as the flow velocity and the pressure of the slurry, and a spacing between the adjacent pressure adjustment plates 21 in the second direction Y is positively correlated to the dimension of the pressure control flow channel 22. Further, in this embodiment of the present application, in the direction directed from the feed port K1 to the first edge E1, the spacing between the adjacent pressure adjustment plates 21 may be set to the gradual increase trend, enabling the pressure control flow channel 22 closer to the first edge E1 to have a larger dimension, thereby making a loss of the slurry in the pressure control flow channel 22 close to the first edge E1 less than a loss of the slurry in the pressure control flow channel 22 close to the feed port K1. This facilitates equalization of the pressures of the slurry at different positions in the second direction Y, improving discharge consistency at the discharge ports K2, and improving the slurry coating uniformity in the coating process.

In some optional embodiments, a length of the first region A1 in the second direction Y may be set to WO. A first pressure adjustment plate 21 is disposed at a central position of the first region A1. A spacing between the first pressure adjustment plate 21 and the feed port K1 in the second direction Y is X1. Then, a first preset spacing W1 between the first pressure adjustment plate 21 and another pressure adjustment plate 21 adjacent to it is calculated according to a formula W1 = a*X12+X1+c, where 0.00001 ≤ a ≤ 0.00003, -0.0002 ≤ b ≤ 0.00005, and 1 ≤ a ≤ 10. After that, a second preset spacing X2 between a second pressure adjustment plate 21 and the discharge port K2 in the second direction Y is calculated according to a formula X2 = X1-W1, and a second preset spacing X3 between a third pressure adjustment plate 21 and the discharge port K2 in the second direction Y is calculated according to a formula X3 = X1+W1. Next, a second preset spacing W2 between the second pressure adjustment plate 21 and another pressure adjustment plate 21 adjacent to it is calculated according to a formula W2 = a*X22+X2+c. Then, the foregoing steps are repeated until a spacing Wtotal between two pressure adjustment plate 21 with a largest spacing is not less than WO. At last, a first actual spacing W1' between the first pressure adjustment plate 21 and the other pressure adjustment plate 21 adjacent to it is calculated according to a formula W1' = (WO/Wtotal)*W1. Then the foregoing steps are repeated to sequentially determine an actual spacing between another pressure adjustment plate 21 and the discharge port K2 in the second direction Y and an actual spacing between the adjacent pressure adjustment plates 21.

In some embodiments, the coating die further includes a first adjustment member 40 connected to the first die 13, where the first adjustment member 40 is configured to adjust a size of an opening of the discharge port K2; and/or the coating die further includes a second adjustment member 50 connected to the second die 14, where the second adjustment member 50 is configured to adjust the size of the opening of the discharge port K2.

The first adjustment member 40 and the second adjustment member 50 may have a plurality of shapes and structures as well as forms of numbers. Optionally, there are a plurality of first adjustment members 40, where the plurality of first adjustment members 40 are disposed side by side in the second direction Y. There are a plurality of second adjustment members 50, where the plurality of second adjustment members 50 are disposed side by side in the second direction Y.

Both the first adjustment member 40 and the second adjustment member 50 may be rod-shaped members configured to adjust the size of the discharge port K2. The first adjustment member 40 is connected to the first die 13, and the second adjustment member 50 is connected to the second die 14. An operator may cause the first die 13 to move under driving of the first adjustment member 40, so as to adjust the discharge port K2, or may cause the second die 14 to move under driving of the second adjustment member 50, so as to adjust the discharge port K2, thereby facilitating the improvement of the slurry coating uniformity.

In some embodiments, the coating die includes a plurality of first adjustment members 40, where the plurality of first adjustment members 40 are disposed side by side in the second direction Y, and a number of the pressure adjustment plates 21 is greater than a number of the first adjustment members 40. In addition/Alternatively, the coating die includes a plurality of second adjustment members 50, where the plurality of second adjustment members 50 are disposed side by side in the second direction Y, and the number of the pressure adjustment plates 21 is greater than a number of the second adjustment members 50.

The plurality of first adjustment members 40 are arranged side by side in the second direction Y. The operator can respectively adjust, by means of the plurality of first adjustment members 40, opening levels of the plurality of discharge ports K2 spaced apart in the second direction Y, so as to flexibly adjust the slurry coating effect. Similarly, the plurality of second adjustment members 50 are arranged side by side in the second direction Y. The operator can respectively adjust, by means of the plurality of second adjustment members 50, the opening levels of the plurality of discharge ports K2 spaced apart in the second direction Y, so as to flexibly adjust the slurry coating effect.

In the embodiments of the present application, the pressure control flow channel 22 formed by the spacing 21 between the pressure adjustment plates may have the same function of adjusting slurry coating. Further, the number of the pressure adjustment plates 21 is greater than the number of the first adjustment members, and/or the number of the pressure adjustment plates 21 is greater than the number of the second adjustment members. Such design enables the pressure adjustment plates 21 to further fine adjust and control the slurry coating effect based on the first adjustment members 40 and the second adjustment members 50, thereby facilitating further improvement of the slurry coating uniformity.

According to a second aspect, an embodiment of the present application further provides a coating device for an electrode sheet. The coating device includes the coating die provided in any one of the foregoing technical solutions, where the coating die is configured to coat a surface of the electrode sheet with a slurry.

Because the coating device for the electrode sheet includes the coating die provided in the foregoing technical solutions, the coating device for the electrode sheet can improve the slurry coating uniformity during a coating process.

According to some embodiments of the present application, referring to FIG. 1 to FIG. 10, the coating die includes a die body 10, a pressure adjustment component 20, and a gasket 30. The die body 10 is provided with a feed port K1 and a discharge port K2. The die body 10 includes a first die 13, a second die 14, and a press strip 15 connected to the second die 14. The first die 13 includes a first accommodating cavity 11 and a second accommodating cavity 12. The press strip 15 is accommodated in the first accommodating cavity 11 and is spaced apart from at least part of an inner wall of the first accommodating cavity 11. The first accommodating cavity 11 is located on a side of the second accommodating cavity 12 close to the feed port K1 in the first direction X, and communicates with the feed port K1. The second accommodating cavity 12 communicates with the discharge port K2. The second accommodating cavity 12 includes a first accommodating portion 121 spaced apart from the first accommodating cavity 11 in the first direction X and a channel structure 122 communicating with the first accommodating portion 121 and the first accommodating cavity 11. The pressure adjustment component 20 is accommodated in the channel structure 122.

The pressure adjustment component 20 has a plurality of first regions A1 and a plurality of second regions A2 that are alternately arranged in a second direction Y. A plurality of pressure adjustment plates 21 are provided in the first regions A1. The plurality of pressure adjustment plates 21 are spaced apart in the second direction Y to form a pressure control flow channel 22. The pressure adjustment component 20 further includes a liquid blocking plate 23 provided in the second region A2. The gasket 30 is sandwiched between the first die 13 and the second die 14. An edge of the gasket 30 in the first direction X is provided with a notch 31. The notch 31 communicates with the pressure control flow channel 22 to form the discharge port K2. A plurality of notches 31 are spaced apart in the second direction Y. The gasket 30 includes a blocking portion 32 located between adjacent ones of the notches 31, where the blocking portion 32 is disposed as covering the liquid blocking plate 23.

The die body 10 has a first edge E1 and a second edge E2 that are opposite in the second direction Y. In a direction directed from the feed port K1 to the first edge E1, a spacing between adjacent ones of the pressure adjustment plates 21 has a gradual increase trend; and/or in a direction directed from the feed port K1 to the second edge E2, a spacing between adjacent ones of the pressure adjustment plates 21 has a gradual increase trend.

The coating die further includes a first adjustment member 40 connected to the first die 13, where the first adjustment member 40 is configured to adjust a size of an opening of the discharge port K2; and/or the coating die further includes a second adjustment member 50 connected to the second die 14, where the second adjustment member 50 is configured to adjust the size of the opening of the discharge port K2.

In conclusion, it should be noted that the foregoing embodiments are for description of the technical solutions of the present application only, rather than for limiting the present application. Although the present application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, various technical features mentioned in the embodiments can be combined in any manner provided that there is no structural conflict. The present application is not limited to the specific embodiments disclosed herein, but includes all technical solutions falling within the scope of the claims.

## Claims

1. A coating die, comprising:
a die body provided with a feed port and a discharge port that are opposite, the die body comprising a first accommodating cavity and a second accommodating cavity that communicate with each other, wherein the first accommodating cavity is located on a side of the second accommodating cavity close to the feed port in a first direction and communicates with the feed port, and the second accommodating cavity communicates with the discharge port; and
a pressure adjustment component accommodated in the second accommodating cavity, the pressure adjustment component comprising a plurality of pressure adjustment plates, wherein the plurality of pressure adjustment plates are spaced apart in a second direction to form a pressure control flow channel, and the first direction intersects the second direction.

2. The coating die according to claim 1, wherein the second accommodating cavity comprises a first accommodating portion spaced apart from the first accommodating cavity in the first direction and a channel structure communicating with the first accommodating portion and the first accommodating cavity; and
the pressure adjustment component is accommodated in the channel structure.

3. The coating die according to claim 2, wherein the pressure adjustment component comprises a first side portion abutting on the first accommodating portion, the first accommodating portion has a first inner wall relatively far away from the pressure adjustment component in the first direction, and the first side portion abuts on and smoothly transitions to the first inner wall.

4. The coating die according to any one of claims 1 to 3, wherein the die body comprises a first die and a second die, the first die comprising the first accommodating cavity and the second accommodating cavity; and
the coating die further comprises a press strip connected to the second die, wherein the press strip is accommodated in the first accommodating cavity and is spaced apart from at least part of an inner wall of the first accommodating cavity.

5. The coating die according to claim 4, further comprising a gasket sandwiched between the first die and the second die, wherein an edge of the gasket in the first direction is provided with a notch, the notch communicating with the pressure control flow channel to form the discharge port.

6. The coating die according to claim 5, wherein the pressure adjustment component has a plurality of first regions and a plurality of second regions that are alternately arranged in the second direction, the plurality of pressure adjustment plates are disposed in the first regions, and the pressure adjustment component further comprises liquid blocking plates disposed in the second regions; and
a plurality of notches are spaced apart in the second direction, and the gasket comprises a blocking portion located between adjacent ones of the notches, wherein the blocking portion is disposed as covering the liquid blocking plate.

7. The coating die according to claim 6, wherein the first die and the second die are disposed opposite each other in a third direction, and each two of the first direction, the second direction, and the third direction intersect each other; and
the pressure adjustment component further comprises a body portion, and the pressure adjustment plate and the liquid blocking plate are located on a same side of the body portion in the third direction.

8. The coating die according to claim 6 or 7, wherein the first die and the second die are disposed opposite each other in the third direction, and each two of the first direction, the second direction, and the third direction intersect each other; and
a dimension of the pressure adjustment plate in the third direction is greater than a dimension of the liquid blocking plate in the third direction.

9. The coating die according to any one of claims 1 to 8, wherein the die body has a first edge and a second edge that are opposite in the second direction, and in a direction directed from the feed port to the first edge, a spacing between adjacent ones of the pressure adjustment plates presents a gradual increase trend; and/or
in a direction directed from the feed port to the second edge, a spacing between adjacent ones of the pressure adjustment plates presents a gradual increase trend.

10. The coating die according to any one of claims 1 to 9, wherein the die body comprises the first die and the second die, and the coating die further comprises a first adjustment member connected to the first die, wherein the first adjustment member is configured to adjust a size of an opening of the discharge port; and/or
the coating die further comprises a second adjustment member connected to the second die, wherein the second adjustment member is configured to adjust the size of the opening of the discharge port.

11. The coating die according to claim 10, wherein the coating die further comprises a plurality of first adjustment members, wherein the plurality of first adjustment members are disposed side by side in the second direction, and a number of the pressure adjustment plates is greater than a number of the first adjustment members; and/or
the coating die further comprises a plurality of second adjustment members, wherein the plurality of second adjustment members are disposed side by side in the second direction, and the number of the pressure adjustment plates is greater than a number of the second adjustment members.

12. A coating device for an electrode sheet, wherein the coating device comprises the coating die according to any one of claims 1 to 11, and the coating die is configured to coat a surface of the electrode sheet with a slurry.
